# FASCICULE DE BREVET EUROPEEN

(11) **EP 3 286 418 B1**
(45) Date de publication et mention de la délivrance du brevet: **08.06.2022**
(21) Numéro de dépôt: 16719262.4
(22) Date de dépôt: 12.04.2016
(51) Int. Cl.: F02B 37/02, F02B 37/10, F02B 37/16

(54) **MÉTHODE DE CONTRÔLE DE LA QUANTITÉ D'AIR INTRODUIT À L'ADMISSION D'UN MOTEUR À COMBUSTION INTERNE SURALIMENTÉ**
VERFAHREN ZUR STEUERUNG DER IN DEN EINLASS EINER AUFGELADENEN BRENNKRAFTMASCHINE ZUGEFÜHRTEN LUFTMENGE
METHOD FOR CONTROLLING THE AMOUNT OF AIR FED INTO THE INTAKE OF A SUPERCHARGED INTERNAL COMBUSTION ENGINE

(30) Priorité: 22.04.2015 FR 1553583
(43) Date de publication de la demande: 28.02.2018
(73) Titulaire: IFP Energies nouvelles, 92500 Rueil-Malmaison (FR)
(72) Inventeur: BAUDRAND, Olivier, 75019 Paris (FR); COLLIOU, Thierry, 38138 Les Cotes d'Arey (FR); ZACCARDI, Jean-Marc, 69008 Lyon (FR)
(74) Mandataire: IFP Energies nouvelles
(86) Numéro de dépôt international: PCT/EP2016/057986
(87) Numéro de publication internationale: WO 2016/169805

(56) Documents cités:
- EP-A2- 1 138 928
- DE-A1- 10 232 519
- FR-A1- 2 448 034
- FR-A1- 2 864 994
- GB-A- 1 140 877

## Description

La présente invention se rapporte à une méthode de contrôle d'un dispositif d'introduction de la quantité d'air à l'admission d'un moteur à combustion interne suralimenté, notamment d'un moteur stationnaire ou pour un véhicule automobile ou industriel.

Comme cela est largement connu, la puissance délivrée par un moteur à combustion interne est dépendante de la quantité d'air introduite dans la chambre de combustion de ce moteur, quantité d'air qui est elle-même proportionnelle à la densité de cet air.

Ainsi, il est habituel d'augmenter cette quantité d'air au moyen d'une compression de l'air extérieur avant qu'il ne soit admis dans cette chambre de combustion. Cette opération, appelée suralimentation, peut être réalisée par tous moyens, tel qu'un turbocompresseur ou un compresseur entraîné, qui peut être centrifuge ou volumétrique.

Dans le cas d'une suralimentation par un turbocompresseur, ce dernier comprend une turbine rotative, à simple flux ou à double flux, reliée par un axe à un compresseur rotatif. Les gaz d'échappement issus du moteur traversent la turbine qui est alors entrainée en rotation. Cette rotation est ensuite transmise au compresseur qui, de par sa rotation, comprime l'air extérieur avant qu'il ne soit introduit dans la chambre de combustion.

Comme cela est mieux décrit dans la demande de brevet français N° 2 478 736, il est prévu, pour pouvoir amplifier de manière significative cette quantité d'air comprimé dans la chambre de combustion du moteur, d'augmenter encore plus la compression de l'air extérieur par le compresseur.

Cela se réalise plus particulièrement en augmentant la vitesse de rotation de la turbine et donc du compresseur.

Pour cela, une partie de l'air comprimé sortant du compresseur est déviée pour être admis directement à l'entrée de la turbine en se mélangeant avec les gaz d'échappement. Cette turbine est alors traversée par une plus grande quantité de fluide (mélange d'air comprimé et de gaz d'échappement), ce qui permet d'augmenter la vitesse de rotation de la turbine et par conséquence du compresseur. Cette augmentation de vitesse du compresseur permet ainsi d'augmenter la pression de l'air extérieur qui sera comprimé dans ce compresseur puis introduit dans la chambre de combustion du moteur.

Le document GB1140877A décrit également un tel moteur et un tel mode de fonctionnement.

Par cela, l'air comprimé a une densité plus élevée ce qui permet d'accroitre la quantité d'air contenue dans la chambre de combustion.

Ce type de moteur suralimenté, bien que donnant satisfaction, présente néanmoins des inconvénients non négligeables.

En effet, le débit de l'air comprimé qui est admis à l'entrée de la turbine n'est pas correctement contrôlé, ce qui peut entrainer un dysfonctionnent du moteur.

Ainsi, à titre d'exemple, en cas de trop grande quantité d'air comprimé déviée à l'entrée de la turbine, les gaz d'échappement entrant dans la turbine sont refroidis de manière trop importante par cet air et amène une diminution du rendement global de la suralimentation.

La présente invention se propose de remédier aux inconvénients mentionnés ci-dessus grâce à une méthode de contrôle d'un dispositif d'introduction d'une quantité d'air à l'admission d'un moteur à combustion interne suralimenté qui permet de répondre à toutes les demandes de puissance du moteur, et en particulier dans les phases de fonctionnement transitoire.

L'invention présente permet de gérer et de réaliser un transfert de l'air comprimé de l'admission vers l'échappement même quand la pression moyenne de l'air comprimé à l'admission est inférieure à celle des gaz à l'échappement. Il suffit uniquement qu'il existe des phases durant le cycle de fonctionnement du moteur où la pression à l'admission est supérieure à celle existant à l'échappement.

Ainsi, la présente invention concerne une méthode de contrôle selon la revendication 1 de la quantité d'air introduit à l'admission d'un moteur à combustion interne suralimenté, ledit moteur comprenant deux sorties de gaz d'échappement reliées chacune à un collecteur d'échappement d'un groupe d'au moins un cylindre, comprenant un dispositif de suralimentation comportant un turbocompresseur avec une turbine à double entrée connectée auxdites sorties de gaz d'échappement ainsi qu'un compresseur d'air extérieur, un conduit de transfert partiel de l'air comprimé du compresseur vers les entrées de la turbine, et deux branches aménagées audit conduit de transfert partiel, lesdites branches étant reliées aux entrées de la turbine et portant chacune des moyens de vannage proportionnel. Selon l'invention, on contrôle la circulation de l'air comprimé dans ces branches pendant des phases de fonctionnement transitoire selon des stratégies appliquées audits moyens de vannage, et déterminées en fonction des caractéristiques des phases stabilisées.

On peut disposer en outre un clapet antiretour sur chacune des branches.

Selon l'invention, une conduite de liaison relie les branches en des points situés entre les moyens de vannage proportionnel et les sorties de gaz d'échappement.

La conduite de liaison peut porter des moyens de vannage.

On peut chauffer l'air comprimé qui circule dans le conduit de transfert.

Pour une stratégie de contrôle, on peut effectuer les étapes suivantes :
- à partir d'un état de réglage d'ouverture des moyens de vannage pour un état stabilisé initial,
   - on diminue le réglage selon un gradient déterminé, jusqu'à une valeur maintenue un temps t,
   - on augmente ledit réglage selon un gradient déterminé pour atteindre le réglage d'ouverture des moyens de vannage pour un état stabilisé final.

L'état initial peut être à faible charge et l'état final à forte charge.

Les états de réglage d'ouverture des moyens de vannage pour les états stabilisés initial et final peuvent être identiques.

Les autres caractéristiques et avantages de l'invention vont apparaître à la lecture de la description qui va suivre, donnée à titre uniquement illustratif et non limitatif, et à laquelle sont annexées :
- la figure 1 qui illustre un moteur à combustion interne avec son dispositif de suralimentation selon un exemple non couvert par les revendications de la présente invention ;
- la figure 2 qui montre un moteur à combustion interne avec son dispositif de suralimentation utilisé selon la présente invention ;
- la figure 3 qui illustre une variante , non couverte par les revendications de la présente invention, du moteur à combustion interne avec son dispositif de suralimentation selon la figure 1 ;
- les figures 4 à 10 montrent des exemples de stratégie de gestion des moyens de vannage ;
- les figures 11 et 12 montrent des exemples de fonctionnement d'un groupe motopropulseur selon l'application de la présente invention.

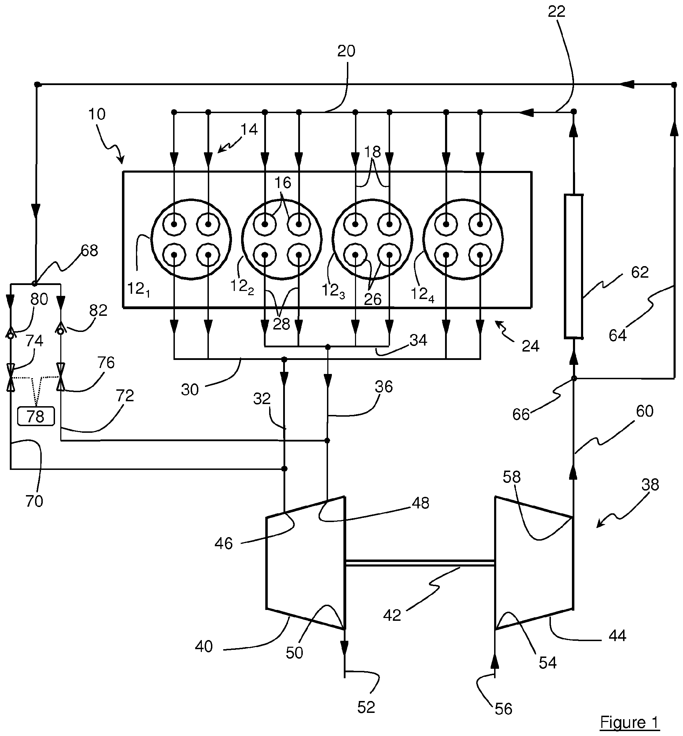

Sur la figure 1, le moteur à combustion interne 10 comprend au moins deux cylindres, ici quatre cylindres référencés 121 à 124 à partir de la gauche de la figure.

Par exemple, ce moteur est un moteur à combustion interne à injection directe, notamment de type Diesel, mais cela n'écarte en aucune manière tout autre type de moteur à combustion interne.

Chaque cylindre comprend des moyens d'admission 14 avec au moins une soupape d'admission 16, ici deux soupapes d'admission contrôlant chacune une tubulure d'admission 18. Les tubulures d'admission 18 aboutissent à un collecteur d'admission 20 alimenté par un conduit d'alimentation 22 en air d'admission, tel que de l'air comprimé.

Ce cylindre comprend aussi des moyens d'échappement des gaz brûlés 24 avec au moins une soupape d'échappement 26, ici également deux soupapes contrôlant chacune une tubulure d'échappement 28.

Dans l'exemple illustré le moteur est prévu pour fonctionner selon un ordre de combustion dénommé 1-3-4-2. Compte tenu de cet ordre de combustion, les tubulures d'échappement du premier cylindre 121 et deuxième cylindre 124, qui forment un premier groupe d'au moins un cylindre, sont connectées à un premier collecteur d'échappement 30 avec une première sortie de gaz d'échappement 32. Les tubulures d'échappement du troisième et quatrième 122 et 123, qui forment un deuxième groupe d'au moins un cylindre, sont connectées à un deuxième collecteur d'échappement 34 qui comporte une deuxième sortie de gaz d'échappement 36.

Les deux sorties de gaz d'échappement aboutissent à un turbocompresseur 38 pour la compression de l'air et plus particulièrement à la turbine de détente 40 de ce turbocompresseur.

Comme illustré sur la figure 1, le turbocompresseur est un turbocompresseur à double entrée, plus connu sous le vocable de turbocompresseur "Twin Scroll".

Ce type de turbocompresseur comprend la turbine de détente 40 balayée par les gaz d'échappement et qui est reliée en rotation par un arbre 42 avec un compresseur 44.

Au niveau de la turbine, l'entrée des gaz d'échappement est divisée en deux sections, une première section d'entrée 46 raccordée à la première sortie de gaz d'échappement 32 du premier collecteur 30 et une deuxième section d'entrée 48 raccordée à la deuxième sortie de gaz d'échappement 36 du deuxième collecteur d'échappement 34.

L'évacuation de gaz 50 de la turbine 40 est raccordée conventionnellement à la ligne d'échappement 52 du moteur.

Le compresseur 44 du turbocompresseur 38 comporte une admission d'air extérieur 54 alimentée par une conduite d'alimentation 56. La sortie d'air comprimé 58 de ce compresseur est reliée au conduit d'alimentation 22 du collecteur d'admission 20 par une conduite 60.

Comme illustré sur la figure 1, il peut être prévu de placer un radiateur de refroidissement de l'air comprimé 62 sur la conduite 60, entre le compresseur et la conduite 22.

Comme mieux visible sur la figure 1, un conduit de transfert 64 permet de faire circuler une partie de l'air comprimé sortant du compresseur 44 vers les entrées 46 et 48 de la turbine.

Plus précisément, ce conduit de transfert partiel prend naissance sur la conduite 60, à un point de d'intersection 66 entre le compresseur et le radiateur de refroidissement 62, et se sépare ensuite, à partir d'un point de bifurcation 68, en deux branches 70 et 72. La branche 70 aboutit à l'entrée 46 de la turbine par sa jonction avec la première sortie de gaz d'échappement 32 et la branche 72 aboutit à l'autre entrée 48 de cette turbine par sa jonction avec la sortie de gaz d'échappement 36.

Chaque branche porte des moyens de vannage proportionnel 74 et 76, telle une vanne proportionnelle, commandés par un moyen de commande 78, qui peut être commun aux deux moyens de vannage. Chacune des vannes proportionnelles permet ainsi de contrôler le débit de la circulation d'air comprimé qui circule dans chacune des branches 70 et 72.

Chaque branche peut également comporter un clapet anti-retour 80 et 82 qui interdit la circulation de l'air comprimé de la branche vers le compresseur tout en empêchant la mise en communication des deux branches.

Cette configuration permet ainsi, pendant le fonctionnement du moteur, de profiter des zones de basse pression échappement régnant ponctuellement dans les collecteurs d'échappement pour introduire de l'air comprimé dans la turbine et augmenter ainsi le débit de cette turbine et par conséquent du compresseur. Cela permet également d'avoir une suralimentation plus efficace pour les bas régimes et notamment de gérer les phases transitoires avec des stratégies de contrôle des vannes proportionnelles adaptées.

Durant le fonctionnement, en cas de besoin d'air en grande quantité dans les cylindres, les vannes 74 et 76 sont commandées en ouverture pour introduire de l'air comprimé provenant du compresseur 44 dans la turbine 40.

L'air comprimé sortant du compresseur 44 circule dans le conduit 64 puis dans les branches 70 et 72 pour aboutir aux entrées de gaz d'échappement 46 et 48 de la turbine 40 en y apportant un surplus de fluide à cette turbine.

Ainsi, la turbine est parcourue non seulement par les gaz d'échappement venant des sorties 32 et 36, mais également par de l'air comprimé qui vient s'ajouter à ces gaz. De ce fait, la rotation de la turbine est augmentée, ce qui entraine une augmentation de rotation du compresseur et, en conséquence, une augmentation de la pression de l'air comprimée qui sort de ce compresseur.

Les vannes 74 et 76 sont contrôlées par le moyen de commande 78 de façon à admettre la quantité d'air comprimé dans la turbine selon les besoins de suralimentation du moteur, et en particulier pendant les phases transitoires comprises entre deux phases de fonctionnement stabilisé.

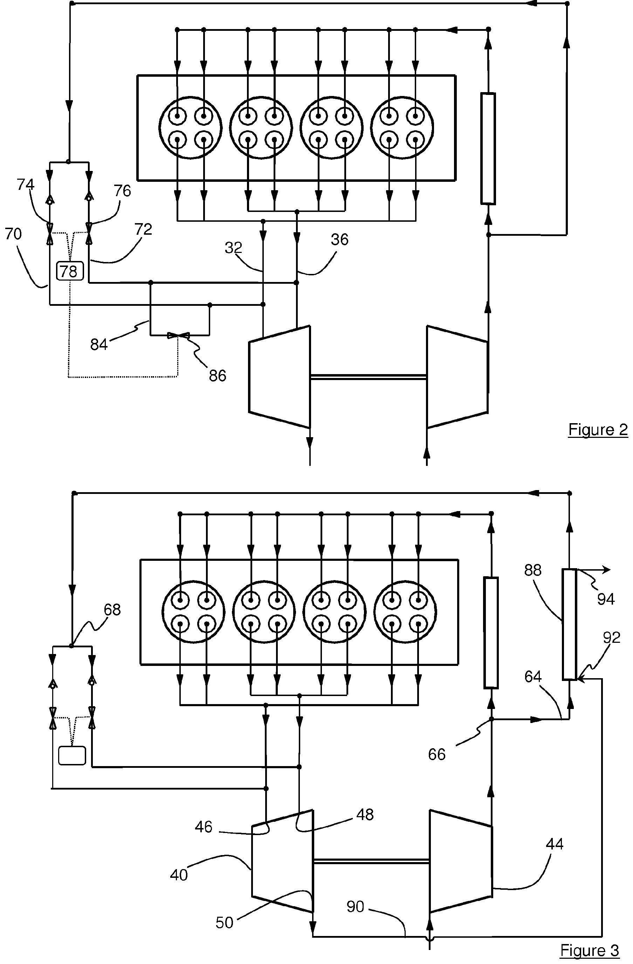

Un mode de réalisation de l'invention est illustré sur la figure 2 , qui comporte les mêmes éléments que ceux de la figure 1 et se distingue de la figure 1 par la mise en place d'une conduite de liaison 84 entre les deux branches 70 et 72. Cette conduite peut être munie de moyens de vannage 86, comme une vanne proportionnelle, qui, ici, est également commandée par le moyen de commande 78.

Selon l'invention, l'une des extrémités de cette conduite est reliée à la branche 70 en un point situé entre la vanne 74 et la sortie de gaz d'échappement 32 et l'autre des extrémités en un point situé entre la vanne 76 et la sortie de gaz d'échappement 36.

Cette conduite permet de contrôler la communication de fluide entre les deux branches arrivant à la turbine.

Plus précisément, cette conduite de liaison permet de dévier une partie de l'air comprimé circulant dans l'une des branches pour l'introduire dans l'autre des branches en se mélangeait avec les gaz d'échappement aux entrées de la turbine 40.

En outre, la conduite de liaison permet de ramener sur une branche de la turbine le différentiel de pression des gaz d'échappement (ou pulsatoire échappement) de l'autre branche qui est décalée angulairement dans le cycle de combustion du moteur.

Sur la figure 3, qui comporte pour l'essentiel les mêmes éléments que ceux de la figure 1, l'air comprimé sortant du compresseur 44 et circulant dans le conduit de transfert 64 est réchauffé avant d'être introduit dans la turbine 40.

Pour cela, le conduit de transfert 64 porte un moyen de chauffage 88 de l'air comprimé, ici un échangeur de chaleur sous la forme d'un radiateur de chauffage, placé entre le point d'intersection 66 et le point de bifurcation 68 que comprend ce conduit. Ce radiateur est traversé par l'air comprimé qui circule dans ce conduit tout en étant parcouru par les gaz d'échappement du moteur. Ces gaz d'échappement proviennent de l'évacuation 50 de la turbine et sont amenés par une conduite 90 à l'entrée 92 du radiateur. Les gaz d'échappement parcourent ce radiateur en transférant la chaleur qu'ils contiennent à l'air comprimé pour ensuite ressortir de ce radiateur par la sortie 94 pour être dirigé vers la ligne d'échappement du moteur.

Ainsi, une partie de l'énergie des gaz d'échappement est récupérée par l'air comprimé qui est introduit dans la turbine par l'un ou l'autre des entrées 46 et 48.

Cet air comprimé chauffé permet ainsi d'apporter un surcroit d'énergie à la turbine qui, en conséquence, tournera à une vitesse plus élevée. Cette vitesse de rotation élevée est ensuite transmise au compresseur qui réalisera une compression plus élevée de l'air extérieur.

La présente invention est particulièrement adaptée pour gérer les phases de fonctionnement transitoire entre deux phases de fonctionnement stabilisées. On entend par "fonctionnement stabilisé" un état dans lequel l'ensemble des actionneurs du moteur ne sont pas modifiés, par exemple, lorsque les quantités de carburant injectées sont constantes dans le temps, le taux d'EGR reste constant, l'actionneur du turbocompresseur est dans une même position, etc. A l'inverse, on entend par "fonctionnement transitoire" la phase au cours de laquelle certains actionneurs sont activés en réponse à une évolution de la demande de puissance de l'utilisateur. On peut décrire par exemple le cas d'une "prise de charge" au cours de laquelle l'utilisateur va demander au moteur de passer d'un état faiblement chargé (peu de couple, peu de puissance) à un état fortement chargé (fort couple, forte puissance). Cette prise de charge peut être réalisée soit à régime moteur constant, soit avec une augmentation simultanée de la charge et du régime. On peut également considérer l'exemple d'une "levée de pied", c'est-à-dire d'une diminution plus ou moins brutale de la demande de couple. Dans chacun de ces cas, les actionneurs du moteur doivent être pilotés afin d'assurer un fonctionnement optimal du groupe motopropulseur (GMP).

Le présent perfectionnement consiste à optimiser la dynamique du moteur lors d'un fonctionnement transitoire en contrôlant l'ouverture et la fermeture des moyens de vannage proportionnel permettant le passage des gaz du conduit de transfert partiel d'air comprimé vers les entrées de la turbine 40.

De façon générale, ces phases transitoires peuvent être définies comme étant des phases de transition entre deux états stabilisés pour lesquels le niveau de balayage, permis par les vannes proportionnelles 74 et 76, est stabilisé et optimal du point de vue des performances moteur attendues sur chacun de ces points de fonctionnement. Le contrôle optimal des moyens de vannage de la boucle de transfert partiel consiste à appliquer une stratégie déterminée de l'évolution de la trajectoire de fermeture ou d'ouverture des moyens de vannage afin de passer d'un état stabilisé à un autre état stabilisé dans des conditions optimisées.

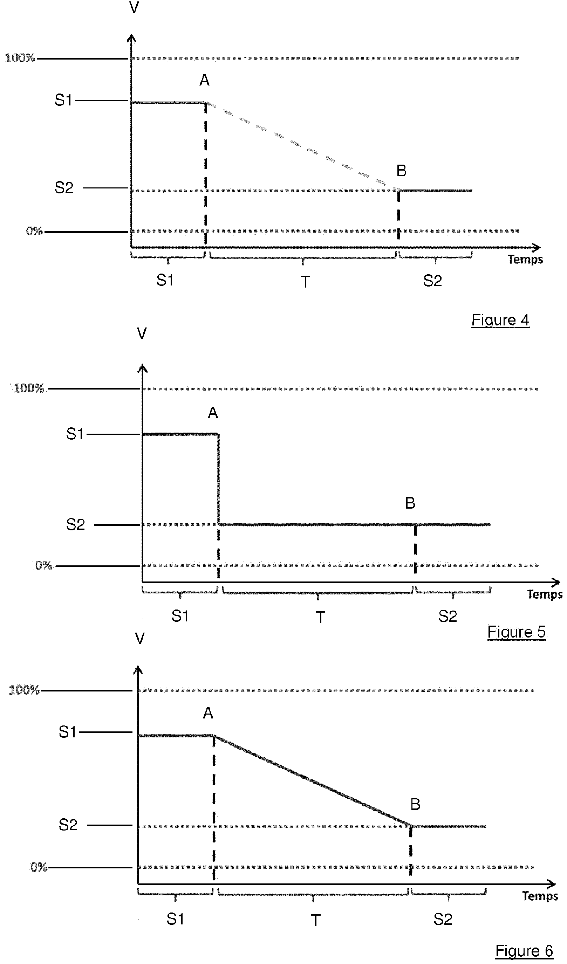

La figure 4 illustre schématiquement cette situation de transition entre les points A, représentatif du point stabilisé (S1) avant la phase transitoire, et B, représentatif du point stabilisé (S2) après la phase transitoire (T) Le point A peut correspondre par exemple au début d'une prise de charge, et le point B à l'instant à partir duquel le couple désiré est atteint. Cela peut également illustrer une diminution de charge entre A et B. La phase transitoire sera quant à elle représentée sur les figures suivantes qui décrivent des exemples de plusieurs stratégies pour gérer de façon optimale le passage entre les deux états stabilisés A et B.

Sur la figure 4, « 100% » et « 0% » marquent respectivement l'ouverture et la fermeture totale du passage des gaz dans les moyens de vannage 74 et 76 (V) en fonction du temps (en seconde). Selon l'invention, la méthode de gestion des phases de transitoires consiste à appliquer des stratégies déterminées comportant au moins une séquence d'ouverture (et/ou de fermeture) des vannes proportionnelles pour obtenir un fonctionnement optimisé du compresseur 44 mu par la turbine 40 pour passer d'un état stabilisé à un autre.

Les figures 5 à 10 illustrent différents exemples de gestion du niveau de balayage au cours de la phase transitoire. Par « niveau de balayage », on désigne ici les quantités de gaz introduites par le conduit de transfert 64 partiel d'air comprimé dans les entrées de la turbine.

La figure 5 correspond au cas d'un « balayage » coupé subitement lors du début de la phase transitoire en A pour le positionner sur le réglage correspondant au point de fonctionnement stabilisé B. On note que le fait de couper le « balayage » subitement ne signifie pas que le moteur atteint son second point B de fonctionnement stabilisé tout de suite.

La figure 6 correspond au cas d'un « balayage » coupé de façon progressive, sensiblement linéaire ou non, au cours de la phase transitoire.

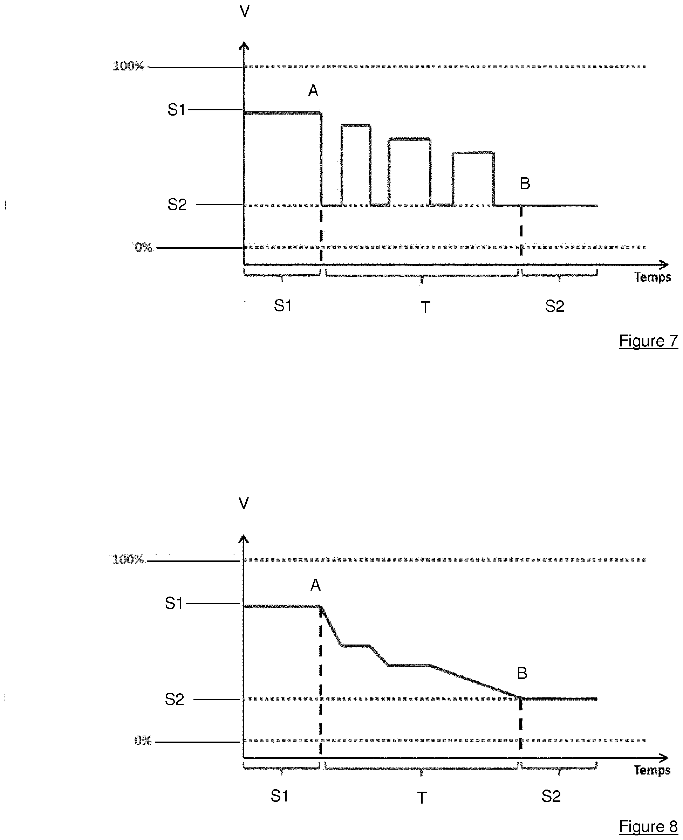

La figure 7 correspond au cas d'une stratégie de « balayage » hachée au cours de la phase transitoire. On réalise ici plusieurs séquences d'ouverture et de fermeture des vannes proportionnelles entre les positions des moyens de vannage des phases stabilisées A et B.

La figure 8 correspond au cas d'un « balayage » coupé progressivement par des maintiens de paliers au cours de la phase transitoire.

Le choix de la méthode optimale de gestion des vannes proportionnelles au cours de la phase transitoire dépend essentiellement des caractéristiques du point de fonctionnement stabilisé de départ (point A) et de celles du point de fonctionnement stabilisé ciblé (point B). En d'autres termes, la stratégie de contrôle des moyens de vannage doit être optimisée pour correspondre au mieux aux caractéristiques des points de fonctionnement du moteur (charge, régime, débit, richesse, temps passés sur chaque point de fonctionnement, etc.) et de la suralimentation (régime de rotation, garde au pompage, etc.).

On peut décrire en exemple le cas d'une prise de charge, c'est-à-dire d'une augmentation rapide de la demande de puissance au moteur. On considère pour cet exemple un cas de fonctionnement transitoire en trois phases principales :
- phase 1 : moteur stabilisé sur un point de fonctionnement à faible charge ;
- phase 2 : transitoire de prise de charge ;
- phase 3 : moteur stabilisé sur un point de fonctionnement à forte charge (charge supérieure à celle de la première phase à "faible" charge).

On considère que le « balayage » est actif à la fois sur le premier point de fonctionnement à faible charge (première phase), et sur le second point de fonctionnement à forte charge avec un niveau qui peut être différent de celui de la première phase en fonction des besoins du moteur propres à ce niveau de charge. Il est également envisagé d'autoriser le balayage au cours du transitoire, à des niveaux variables, selon les exemples illustrés précédemment.

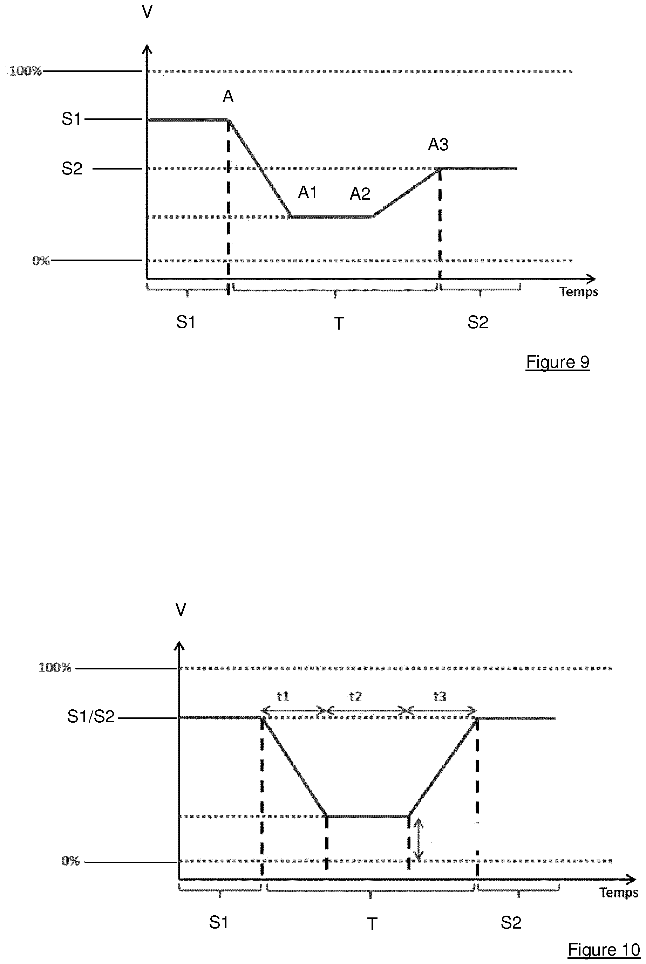

La figure 9 illustre schématiquement le cas de prise de charge avec une gestion simplifiée du balayage. Dans un premier temps, le balayage est d'abord progressivement coupé en début de transitoire (trajectoire A-A1), puis on conserve un palier à un certain niveau de « balayage » en cours de transitoire (trajectoire A1-A2), et on augmente progressivement le « balayage » en fin de transitoire (trajectoire A2-A3).

La figure 10 illustre l'exemple dans lequel les deux phases stabilisées sont opérées à un même niveau de « balayage », c'est-à-dire aux mêmes réglages des vannes proportionnelles. On considère que seul le niveau de fermeture au cours du transitoire peut être modifié. Cette stratégie repose sur 4 paramètres : le délai de coupure du balayage (t1), la durée de coupure (i.e. le temps passé à balayage réduit ou interdit, t2), le délai de remise en marche du balayage (t3) et le "niveau" de coupure.

Les réalisations montrent qu'il y a un compromis à trouver entre :
- une remise en route rapide du « balayage » qui peut conduire à un "trou" de couple (lié aux équilibres de pression admission / échappement, au taux de gaz résiduels dans la chambre de combustion, etc.) ;
- un arrêt prolongé du système de « balayage » qui peut conduire à une diminution du régime de rotation de la turbine, diminution qui peut affecter ensuite toute la dynamique lorsque le « balayage » est à nouveau autorisé.

Une stratégie optimale identifiée jusqu'alors consiste :
- à couper le balayage très rapidement en début de phase transitoire afin d'obtenir une montée rapide de la charge. En effet, puisque le point de fonctionnement à "faible charge" permet le balayage, le moteur dispose d'une bonne marge de richesse pour enrichir le mélange rapidement et monter en charge (sans toutefois émettre de fumées) ;
- à couper ensuite partiellement le balayage peu de temps (environ 0.2 à 0.3 seconde sur les cas simulés) pour ne pas écrouler le régime de rotation de la turbine (une coupure partielle permet a priori de conserver un débit et de maintenir le régime turbine pendant la phase transitoire) ;
- et finalement à remettre le balayage en route "doucement" pour ne pas faire apparaître de "trou" de couple.

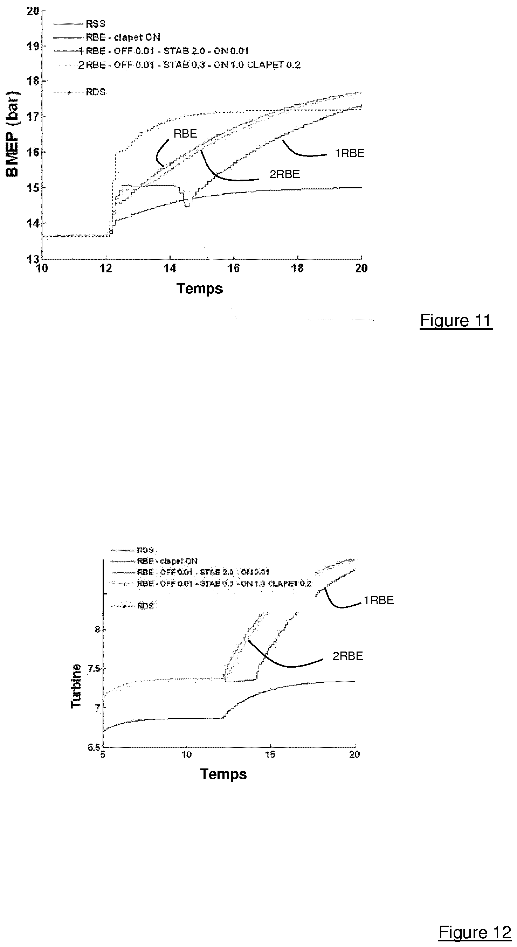

Cette stratégie optimale ainsi que d'autres cas simulés sont illustrés sur la figure 11. La courbe "RSS" correspond au fonctionnement de référence "Référence Simple Suralimentation". La courbe "RDS" correspond à un cas de "Référence Double Suralimentation", cas asymptotique mentionné sur cette figure uniquement à titre indicatif, le système de balayage permettant a priori à un moteur simple suralimentation de gagner en performances sans toutefois atteindre celles d'un moteur à double suralimentation.

Les autres courbes correspondent à un moteur doté d'une simple suralimentation équipé d'un système de transfert partiel d'air comprimé ou dit « balayage », selon l'invention. La courbe "RBE" (pour Référence Balayage Externe) correspond au cas autorisant le balayage en continu, c'est-à-dire, sur le point de faible charge, pendant la phase transitoire, et sur le point de forte charge.

La courbe "1 RBE - OFF 0.01 - STAB 2.0 - ON 0.01" correspond à un cas où le délai de coupure du balayage est de 0.01 seconde, la durée d'interdiction du balayage est de 2.0 secondes, et le délai de remise en route du balayage est de 0.01 seconde. On constate sur ce cas qu'un "trou" de couple apparaît lors de la remise en route du balayage car celui-ci a été arrêté trop longtemps.

La courbe "2RBE - OFF 0.01 - STAB 0.3 - ON 0.2" correspond finalement à un cas optimal où le délai de coupure du balayage est de 0.01 seconde, la durée d'interdiction du balayage est de 0.2 secondes, et le délai de remise en route du balayage est de 0.2 seconde. Comme on peut le constater sur cette figure, cette stratégie du contrôle du balayage permet d'obtenir une montée rapide en charge.

La figure 12 illustre l'évolution du régime de la turbine 40. On observe notamment la légère chute de régime correspondant au cas qui interdit trop longuement le balayage.

Comme indiqué précédemment, la stratégie de contrôle optimale varie d'un moteur à un autre, les valeurs des différents paramètres de contrôle indiquées ici ne sont donc fournies qu'à titre indicatif.

## Revendications

1. Méthode de contrôle de la quantité d'air introduit à l'admission d'un moteur à combustion interne suralimenté, ledit moteur comprenant deux sorties de gaz d'échappement (32, 36) reliées chacune à un collecteur d'échappement (30, 34) d'un groupe d'au moins un cylindre (12₁, 12₂, 12₃, 12₄), comprenant un dispositif de suralimentation (38) comportant un turbocompresseur avec une turbine (40) à double entrée (46, 48) connectée auxdites sorties de gaz d'échappement ainsi qu'un compresseur (44) d'air extérieur, un conduit de transfert partiel (64) de l'air comprimé du compresseur vers les entrées de la turbine, et
deux branches (70, 72) aménagées audit conduit de transfert partiel, lesdites branches étant reliées aux entrées de la turbine et portant chacune des moyens de vannage (74, 76), **caractérisée en ce que** lesdits moyens de vannage sont proportionnels, et
**en ce que** l'on contrôle la circulation de l'air comprimé dans ces branches pendant des phases de fonctionnement transitoire selon des stratégies appliquées audits moyens de vannage, et déterminées en fonction des caractéristiques des phases stabilisées ,
et **en ce que** l'on relie les branches (70 ; 72) par une conduite de liaison (84), une des extrémités de la conduite de liaison (84) étant reliée à la branche (70) en un point situé entre le moyen de vannage proportionnel (74) et la sortie de gaz d'échappement (32) et l'autre extrémité de la conduite de liaison (84) étant reliée à la branche (72) en un point situé entre le moyen de vannage proportionnel (76) et la sortie de gaz d'échappement (36).

2. Méthode selon la revendication 1, **caractérisée en ce que** l'on dispose en outre un clapet antiretour (80, 82) sur chacune des branches.

3. Méthode selon l'une des revendication 1 ou 2, **caractérisée en ce que** la conduite de liaison porte des moyens de vannage (86).

4. Méthode selon la revendication 1, **caractérisée en ce que** l'on chauffe l'air comprimé qui circule dans le conduit de transfert (64).

5. Méthode selon l'une des revendications 1 à 4, dans laquelle pour une stratégie de contrôle, on effectue les étapes suivantes :
- à partir d'un état de réglage d'ouverture des moyens de vannage pour un état stabilisé initial,
- on diminue le réglage selon un gradient déterminé, jusqu'à une valeur maintenue un temps t,
- on augmente ledit réglage selon un gradient déterminé pour atteindre le réglage d'ouverture des moyens de vannage pour un état stabilisé final.

6. Méthode selon la revendication 5, dans laquelle l'état initial est à faible charge et l'état final à forte charge.

7. Méthode selon l'une des revendications 5 ou 6, dans lequel les états de réglage d'ouverture des moyens de vannage pour les états stabilisés initial et final sont identiques.

## Patentansprüche

1. Verfahren zur Steuerung der Luftmenge, die in den Einlass eines aufgeladenen Verbrennungsmotors eingeführt wird, wobei der Motor zwei Abgasauslässe (32, 36) umfasst, die jeder mit einem Abgaskrümmer (30, 34) einer Baugruppe von mindestens einem Zylinder (12₁, 12₂, 12₃, 12₄) verbunden sind, umfassend eine Aufladevorrichtung (38), die einen Turboverdichter mit einer Turbine (40) mit doppeltem Einlass (46, 48), die mit den Abgasauslässen verbunden sind, sowie einen Außenluftverdichter (44) aufweist, eine Leitung (64) zur partiellen Übertragung der verdichteten Luft des Verdichters zu den Einlässen der Turbine, und zwei an der Leitung zur partiellen Übertragung angeordnete Zweige (70, 72), wobei die Zweige mit den Einlässen der Turbine verbunden sind und jeweils Ventilmittel (74, 76) tragen;
**dadurch gekennzeichnet, dass** die Ventilmittel proportional sind und dass die Zirkulation der verdichteten Luft in diesen Zweigen während Übergangsbetriebsphasen nach Strategien gesteuert wird, die auf die Ventilmittel angewandt werden und die in Abhängigkeit von den Merkmalen der stabilisierten Phasen bestimmt werden, und dass die Zweige (70; 72) durch eine Verbindungsleitung (84) verbunden sind, wobei ein Ende der Verbindungsleitung (84) an einem Punkt zwischen den Proportionalventilmitteln (74) und dem Abgasauslass (32) mit dem Zweig (70) verbunden ist und das andere Ende der Verbindungsleitung (84) an einem Punkt zwischen den Proportionalventilmitteln (76) und dem Abgasauslass (36) mit dem Zweig (72) verbunden ist.

2. Verfahren nach Anspruch 1, **dadurch gekennzeichnet, dass** an jedem der Zweige ferner ein Rückschlagventil (80, 82) angeordnet ist.

3. Verfahren nach einem der Ansprüche 1 oder 2, **dadurch gekennzeichnet, dass** die Verbindungsleitung Ventilmittel (86) trägt.

4. Verfahren nach Anspruch 1, **dadurch gekennzeichnet, dass** die durch die Übertragungsleitung (64) strömende Luft erwärmt wird.

5. Verfahren nach einem der Ansprüche 1 bis 4, wobei für eine Steuerungsstrategie die folgenden Schritte durchgeführt werden:
- ausgehend von einem Öffnungseinstellungszustand der Ventilmittel für einen stabilisierten Ausgangszustand
- wird die Einstellung gemäß einem bestimmten Gradienten bis zu einem Wert verringert, der eine Zeit t aufrechterhalten wird,
- wird die Einstellung gemäß einem bestimmten Gradienten erhöht, um die Öffnungseinstellung der Ventilmittel für einen stabilisierten Endzustand zu erreichen.

6. Verfahren nach Anspruch 5, wobei der Ausgangszustand gering belastet ist und der Endzustand hoch belastet ist.

7. Verfahren nach einem der Ansprüche 5 oder 6, wobei die Öffnungseinstellungszustände der Ventilmittel für den stabilisierten Ausgangszustand und den stabilisierten Endzustand identisch sind.

## Claims

1. Method for controlling the quantity of air fed into the intake of a supercharged internal combustion engine, said engine comprising two exhaust gas outlets (32, 36) each linked to an exhaust manifold (30, 34) of a group of at least one cylinder (12₁, 12₂, 12₃, 12₄), comprising a supercharging device (38) comprising a turbocompressor with a turbine (40) with dual intake (46, 48) connected to said exhaust gas outlets and an outside air compressor (44), a partial transfer duct (64) transferring compressed air from the compressor to the intakes of the turbine, and two branches (70, 72) formed on said partial transfer duct, said branches being linked to the intakes of the turbine and each bearing valving means (74, 76), **characterized in that** said valving means are proportional, and
**in that** the circulation of the compressed air in these branches during transient operating phases is controlled according to strategies applied to said valving means, and determined as a function of the characteristics of the stabilized phases,
and **in that** the branches (70; 72) are linked by a link duct (84), one of the ends of the link duct (84) being linked to the branch (70) at a point situated between the proportional valving means (74) and the exhaust gas outlet (32) and the other end of the link duct (84) being linked to the branch (72) at a point situated between the proportional valving means (76) and the exhaust gas outlet (36).

2. Method according to Claim 1, **characterized in that** there is also a check valve (80, 82) on each of the branches.

3. Method according to one of Claims 1 and 2, **characterized in that** the link duct bears valving means (86) .

4. Method according to Claim 1, **characterized in that** the compressed air which circulates in the transfer duct (64) is heated.

5. Method according to one of Claims 1 to 4, wherein, for a control strategy, the following steps are performed:
- from an open setting state of the valving means for an initial stabilized state,
- the setting is reduced according to a determined gradient, to a value maintained for a time t,
- said setting is increased according to a determined gradient to reach the open setting of the valving means for a final stabilized state.

6. Method according to Claim 5, wherein the initial state is a low charge and the final state is a high charge.

7. Method according to one of Claims 5 and 6, wherein the open setting states of the valving means for the initial and final stabilized states are identical.
